(19) Europäisches Patentamt
European Patent Office
Office européen des brevets

(11) **EP 2 835 174 B1**

(12) **EUROPEAN PATENT SPECIFICATION**

(45) Date of publication and mention
of the grant of the patent:
**06.05.2020 Bulletin 2020/19**

(51) Int Cl.:
*B01D 63/02* (2006.01)     *B01D 63/00* (2006.01)
*B01D 63/04* (2006.01)     *C02F 1/44* (2006.01)

(21) Application number: **13772065.2**

(22) Date of filing: **02.04.2013**

(86) International application number:
**PCT/JP2013/060098**

(87) International publication number:
**WO 2013/151051 (10.10.2013 Gazette 2013/41)**

(54) **HOLLOW-FIBER MEMBRANE MODULE, AND HOLLOW-FIBER MEMBRANE UNIT EQUIPPED WITH HOLLOW-FIBER MEMBRANE MODULE**

HOHLFASERMEMBRANMODUL UND HOHLFASERMEMBRANEINHEIT MIT HOHLFASERMEMBRANMODUL

MODULE MEMBRANAIRE À FIBRES CREUSES ET UNITÉ MEMBRANAIRE À FIBRES CREUSES ÉQUIPÉE DE CE MODULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.04.2012   JP 2012083709**
**07.05.2012   JP 2012106147**
**19.10.2012   JP 2012232103**

(43) Date of publication of application:
**11.02.2015 Bulletin 2015/07**

(73) Proprietor: **Mitsubishi Chemical Corporation**
**Tokyo 100-8251 (JP)**

(72) Inventors:
• **IDEGUCHI Makoto**
**Toyohashi-shi**
**Aichi 440-8601 (JP)**
• **SASAKAWA Manabu**
**Toyohashi-shi**
**Aichi 440-8601 (JP)**
• **NAKAHARA Yoshihito**
**Tokyo 100-8253 (JP)**
• **UENO Nobuyasu**
**Toyohashi-shi**
**Aichi 440-8601 (JP)**
• **TANAKA Toshinori**
**Toyohashi-shi**
**Aichi 440-8601 (JP)**
• **AKAGAWA Kazumi**
**Toyohashi-shi**
**Aichi 440-8601 (JP)**
• **TAKEUCHI Masato**
**Toyohashi-shi**
**Aichi 440-8601 (JP)**
• **ZOU Zhuoyi**
**Tokyo 100-8253 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 352 681        WO-A1-2007/080910**
**WO-A1-2007/127768    WO-A1-2012/008115**
**JP-A- H0 631 143        JP-A- H11 128 692**
**JP-A- 2000 107 756     JP-A- 2000 237 549**
**JP-A- 2000 254 457     JP-A- 2002 282 655**
**JP-A- 2003 260 338     JP-A- 2004 337 845**
**JP-A- 2007 152 238     JP-A- 2008 142 583**
**JP-A- 2009 285 527     US-A- 3 993 816**
**US-A- 5 182 019         US-A- 5 639 373**
**US-A1- 2001 027 951   US-A1- 2011 049 038**
**US-A1- 2012 006 739**

**Description**

TECHNICAL FIELD

The present invention relates to a hollow-fiber membrane module, and a hollow-fiber membrane unit equipped with a hollow-fiber membrane module.

BACKGROUND ART

Hitherto, a hollow-fiber membrane unit has been known in which a plurality of hollow-fiber membrane modules are arranged (for example, Patent Document 1). This hollow-fiber membrane module is formed by stacking a hollow-fiber membrane sheet formed by arranging a hollow-fiber membrane in a sheet shape and liquid-tightly fixing this stacked body to an elongated case using a fixing resin (potting resin). In addition, the end part of the hollow-fiber membrane is open and the hollow-fiber membrane communicates with the internal space of the case.

In such a hollow-fiber membrane module, the water to be treated on the primary side (water to be treated side) of the hollow-fiber membrane is filtered under reduced pressure inside the hollow-fiber membrane and the treated water is allowed to flow toward the case when a negative pressure is applied to the inside of the case. Thereafter, the treated water that filtered through a hollow-fiber membrane is discharged toward the device provided on the secondary side (treated water side) of the hollow-fiber membrane module through the water intake port provided in the case.

Moreover, an air diffuser for physically washing the hollow-fiber membrane is provided downward the hollow-fiber membrane module. The air is blown into the water to be treated by the air diffuser and the bubble thus generated hits the hollow-fiber membrane, thereby physically washing the hollow-fiber membrane. Furthermore, in the hollow-fiber membrane unit formed by arranging a plurality of hollow-fiber membrane modules, a gap is provided between the hollow-fiber membrane modules so that the bubbles from the air diffuser are able to penetrate between the hollow-fiber membrane modules.

In addition, a hollow-fiber membrane module hitherto has been known in which a water collecting member for collecting the filtered water is coupled to the end part of the hollow-fiber membranes arranged in a sheet shape. This hollow-fiber membrane module is constituted such that the water to be treated surrounding the hollow-fiber membrane is sucked into the hollow-fiber membrane and filtered when a negative pressure is generated in the water collecting member and the hollow-fiber membrane from the downstream side (filtered water side) of the water collecting member. In addition, washing of such a hollow-fiber membrane module is performed such that the a washing liquid is allowed to flow from the filtered water side to the water to be treated side when a positive pressure is generated in the water collecting member and the hollow-fiber membrane from the filtered water side of the water collecting member and thus contaminants adhered on the surface and inside fine pores of the hollow-fiber membrane are desorbed from the hollow-fiber membrane. In the hollow-fiber membrane module described in these documents, there is a case in which a pressure difference of several hundred kPa is generated inside the hollow-fiber membrane module, particularly inside the water collecting member at the time of the filtration treatment and the washing treatment of the hollow-fiber membrane module, and it is desired to extend the product life cycle by enhancing the pressure resistant performance of the water collecting member in order to increase the filtering capacity of the hollow-fiber membrane module or depending on the use application of the hollow-fiber membrane module. Moreover, as the structure to increase the pressure resistant performance of the hollow-fiber membrane module, it has been known that a material excellent in the substrate strength is used, a structure able to enhance the adhesive strength with a sealant is used, or a cushioning material is provided at the interface between the machinery and the sealant (for example, Patent Documents 2 to 4).

In addition, a hollow-fiber membrane module hitherto has been known in which the end part of the bundle formed by bundling the hollow-fiber membranes is fixed to the housing using a fixing resin. This hollow-fiber membrane module is constituted such that the water filtered through the hollow-fiber membrane is introduced into the housing and collected toward the downstream side through the water collecting passage in the housing (for example, patent document 4). In this patent document 4, when manufacturing the flat type hollow-fiber membrane module, the bundle (stacked body) of the hollow-fiber membrane and the housing (water collecting member) are fixed such that the end part of the hollow-fiber membrane is cut to expose the opening to the end face and the fixing resin is injected into the housing in the state of holding the bundle of the hollow-fiber membranes in the housing and fixed.

EP 1 352 681 A1 relates to a hollow fiber membrane module. A hollow fiber membrane module comprises a hollow fiber membrane bundle inserted into an opening section of a housing. The housing is a hollow columnar member having a H-letter shape which is provided with a hollow inner path. The housing further includes a resin pouring section for fixing of the bundle.

CITATION LIST

PATENT DOCUMENT

Patent Document 1: WO 2010/098089 A
Patent Document 2: JP 2008-142583 A
Patent Document 3: JP 2009-195844 A
Patent Document 4: JP 2006-61816 A

DISCLOSURE OF THE INVENTION

PROBLEM TO BE SOLVED BY THE INVENTION

However, in general, it is preferable that the amount of treated water per unit volume of the hollow-fiber membrane module constituting the hollow-fiber membrane unit determined by the membrane area per unit volume and the permeation rate of the water to be treated is great in order to prevent an increase in size of the hollow-fiber membrane unit. Hence, it is preferable to increase the membrane area per unit volume and the permeation rate. However, the hollow-fiber membrane is too dense when the membrane area per unit volume is excessively increased and thus the washing effect of aeration by the air diffuser decreases. In addition, the physical washing of the hollow-fiber membrane may not be sufficiently performed for this reason. As a result, the hollow-fiber membrane is clogged and the permeation rate of water to be treated decreases. Consequently, there is a problem that only a simple increase in the membrane area per unit volume may not lead to an increase in the amount of treated water per unit volume.

In view of such a circumstance, the invention has been achieved firstly to solve the problem described above and an object thereof is to provide a hollow-fiber membrane unit in which a decrease in the permeation rate of the membrane can be prevented by increasing the washing efficiency of the hollow-fiber membrane module and the amount of treated water can be increased by properly adjusting the membrane area per unit volume, and a hollow-fiber membrane module usable in such a hollow-fiber membrane unit.

In addition, in the structure described in Patent Document 2, it is required to mix a reinforcing agent with the substrate or to use a special material and thus it is not possible to use a water collecting member formed of a reinforcing agent or a material which is not resistant to the substances contained in the water to be treated, as a result, there is a problem that the degree of freedom of the use application of the hollow-fiber membrane module is low. Moreover, in the structure described in Patent Documents 3 and 4, the structure is complicated in order to improve the strength, and the hollow-fiber membrane module is increased in size in order to secure the space for disposing the reinforcing structure, and thus there is a restriction on the structural design of the hollow-fiber membrane module. Furthermore, the improvement in pressure resistant performance is limited depending on the structure of the membrane module, and thus a sufficient function may not be exerted in some cases.

In view of such a circumstance, the invention has been achieved secondly to solve the problem described above and another object thereof is to provide a hollow-fiber membrane module of which the use application is not limited and in which the pressure resistant strength of the hollow-fiber membrane module can be improved by a simple structure.

In addition, the fixing resin (potting resin) is injected into the housing while holding the bundle in the housing in the method for manufacturing a flat type hollow-fiber membrane module which has been used in the related art. The fixing resin does not sufficiently spread through unless there is a certain space between the hollow-fiber membranes constituting the bundle and thus defective sealing between the hollow-fiber membranes occurs when a flat type hollow-fiber membrane module is manufactured using such a method. Hence, in the method for manufacturing a flat type hollow-fiber membrane module which has been used in the related art, there is a problem that it is impossible to manufacture a flat type hollow-fiber membrane module having a high packing density of the hollow-fiber membrane.

Moreover, in the method for manufacturing a flat type hollow-fiber membrane module which has been used in the related art, it is required to use a fixing resin having a relatively low viscosity and a slow cure rate since it is necessary to maintain the sufficient fluidity of the fixing resin until the fixing resin is injected at one or plural locations and spreads through between the hollow-fiber membranes and thus an increase in the cure rate (that is, shortening of time for potting processing) of the fixing resin is limited.

In view of such a circumstance, the invention has been achieved thirdly to solve the problem described above and still another object thereof is to provide a method for manufacturing a hollow-fiber membrane module in which the packing density of the hollow-fiber membrane can be increased and which can be manufactured in a short time, and a hollow-fiber membrane module manufactured by such a method.

MEANS FOR SOLVING PROBLEM

According to the experiment conducted by the inventors or the like, it has been demonstrated that the membrane area per unit volume is properly adjusted when a width of the case is 20 mm or less and the proportion occupied by the total area of the cross-section of the hollow-fiber membrane on one surface having an opening part formed thereon is at least 45%, and thus the amount of water treated by the hollow-fiber membrane module can be increased.

Consequently, in order to solve the first problem described above, the invention is a hollow-fiber membrane module as defined in claim 1.

According to the invention having such a configuration, it is possible to have a thickness of the case of the hollow-fiber membrane module of 20 mm or less and a proportion occupied by a total area of a cross-section of a hollow-fiber membrane on the one surface having an opening part formed thereon of at least 45%, and this makes it possible to properly adjust the membrane area per unit volume and thus to increase the amount of water treated by the hollow-fiber membrane module.

In addition, in the invention, the water collecting member is preferably equipped with a means for causing the compressive deformation of the hollow-fiber membrane in the radial direction thereof.

According to the invention having such a configuration, it is possible to narrow the cross-section of the hollow-fiber membrane. Moreover, it is possible to sufficiently secure the proportion occupied by the total area of the cross-section of the hollow-fiber membrane even if the width of the case is decreased by narrowing the cross-section of the hollow-fiber membrane.

In this case, the means for causing compressive deformation is preferably a pair of convex parts formed on facing inner walls of the water collecting member.

In the invention, the water intake port is in an elliptical shape having a minor axis extending in the out-of-plane direction of the hollow-fiber membrane sheet.

According to the invention having such a configuration, it is possible to secure a water intake port having a sufficient size even if the water collecting member (case) is thin.

In addition, in the invention, the water intake port is formed on at least one end face of the water collecting member, and a thick wall part having a thickened thickness being thicker than the basic width in the out-of-plane direction of the hollow-fiber membrane sheet of the water collecting member is equipped on the at least one end face of the water collecting member having a water intake port formed thereon.

According to the invention having such a configuration, it is possible to secure the area for forming the water intake port by widening the width of the end part at which a water intake port is formed.

In addition, in the invention, the water collecting member may have a reinforcing structure formed by thickening the side wall of the water collecting member in the out-of-plane direction of the hollow-fiber membrane sheet.

According to the invention having such a configuration, it is possible to secure the rigidity of the case by the reinforcing structure even when the case is thin.

In addition, according to the experiment conducted by the inventors or the like, it has been demonstrated that it is possible to expose the hollow-fiber membrane to a great quantity of air from the air diffuser and thus to improve the washing efficiency when the thickness of the side wall of the case in the width direction of the hollow-fiber membrane module is 2 mm or less.

Consequently, in the invention, the thickness of the side wall of the water collecting member in the out-of-plane direction of the hollow-fiber membrane sheet is 2 mm or less.

According to the invention having such a configuration, it is possible to expose the hollow-fiber membrane to a great quantity of air from the air diffuser and thus to improve the washing efficiency.

In addition, according to the experiment conducted by the inventors or the like, it has been demonstrated that it is possible to further increase the physical washing efficiency of the hollow-fiber membrane when the hollow-fiber membrane modules are arranged at an interval of 3 mm or more and 15 mm or less in the hollow-fiber membrane unit using the hollow-fiber membrane module described above.

Consequently, in the invention, the hollow-fiber membrane unit is formed by arranging a plurality of the hollow-fiber membrane modules described above and the plurality of the hollow-fiber membrane modules are arranged at an interval of 3 mm or more and 15 mm or less.

According to the invention having such a configuration, it is possible to further increase the physical washing efficiency of the hollow-fiber membrane.

In this case, it is preferable that the thick wall part of the hollow-fiber membrane module is dimensioned so as to be in contact with the thick wall part of the adjacent hollow-fiber membrane module, and the reinforcing structure of the hollow-fiber membrane module is dimensioned so as to be in contact with the reinforcing structure of the adjacent hollow-fiber membrane module.

According to the invention having such a configuration, it is possible to allow the thick wall part and the reinforcing structure to function as a spacer between the adjacent hollow-fiber membrane modules and thus to properly maintain the width between the hollow-fiber membrane modules.

In addition, in the invention, a collective water intake pipe which couples two or more adjacent hollow-fiber membrane modules and communicates with all water intake ports of the coupled two or more hollow-fiber membrane modules is preferably included.

According to the invention having such a configuration, it is possible to collect the treated water filtered by the collective water intake pipe, and this makes it possible to decrease the number of components.

In addition, in the invention, a seal member which is disposed between the collective water intake pipe and the hollow-fiber membrane modules and surrounds the water intake ports is preferably included.

According to the invention having such a configuration, it is possible to securely seal the space between the collective water intake pipe and the water intake ports of the hollow-fiber membrane modules.

In this case, it is preferable that the membrane area per volume of the hollow-fiber membrane is preferably from 100 to 1000 $m^2/m^3$.

In addition, in order to solve the third problem described above, the invention is a method for manufacturing a hollow-fiber membrane module equipped with one sheet of hollow-fiber membrane sheet formed by arranging and binding a great number of hollow-fiber membranes, which includes a process of coating a liquid resin composition on a vicinity of a side having a tip of a hollow-fiber membrane arranged thereon of a hollow-fiber membrane sheet and a process of attaching this hollow-fiber membrane stacked body to a water collecting member.

EFFECT OF THE INVENTION

It is possible to solve the third problem that a decrease in the permeation rate of the membrane can be prevented by increasing the washing efficiency of the hollow-fiber membrane module and the amount of treated water can be increased by properly adjusting the membrane area per unit volume as described above.

In addition, it is possible to solve the second problem that the use application of the hollow-fiber membrane module is not limited and the pressure resistant strength thereof can be improved by a simple structure as described above.

In addition, according to the claimed invention, it is possible to solve the first problem that the packing density of the hollow-fiber membrane can be increased and the hollow-fiber membrane module can be manufactured in a short time as described above.

BRIEF DESCRIPTION OF DRAWINGS

Fig. 1 is a perspective view of a hollow-fiber membrane unit equipped with a hollow-fiber membrane module according to an embodiment of the invention;

Fig. 2 is a cross-sectional view of the II-II' cross-section of Fig. 1;

Fig. 3 is a trihedral figure of a hollow-fiber membrane module according to an embodiment of the invention;

Fig. 4 is an enlarged perspective view of a part of a hollow-fiber membrane module according to an embodiment of the invention;

Fig. 5 is a cross-sectional view of a cross-section in a horizontal direction of a hollow-fiber membrane module according to an embodiment of the invention;

Fig. 6 is a cross-sectional view of the VI-VI' cross-section of Fig. 4;

Fig. 7 is a cross-sectional view of the VII-VII' cross-section of Fig. 6;

Fig. 8 is a cross-sectional view of the VIII-VIII' cross-section of Fig. 6;

Fig. 9 is a perspective view illustrating a collective water intake pipe of a hollow-fiber membrane module according to an embodiment of the invention;

Fig. 10 is an enlarged cross-sectional view of a part of a hollow-fiber membrane module according to an embodiment of the invention and a cross-sectional view of the X-X cross-section of Fig. 9;

Fig. 11 is a graph illustrating a result of a differential pressure test of a hollow-fiber membrane module according to an embodiment of the invention;

Fig. 12 is a graph illustrating a result of a differential pressure test of a hollow-fiber membrane module according to Comparative Example;

Fig. 13 is a perspective view of a hollow-fiber membrane module according to an example not forming part of the claimed invention;

Fig. 14 is a cross-sectional view of the XIV-XIV' cross-section of a hollow-fiber membrane module illustrated in Fig. 13;

Fig. 15 is a cross-sectional view of the XV-XV' cross-section of a hollow-fiber membrane module illustrated in Fig. 13;

Fig. 16 is a perspective view illustrating a flat type hollow-fiber membrane module according to an example not forming part of the claimed invention;

Fig. 17 is a cross-sectional view illustrating a cross-section of a water collecting member according to an example not forming part of the claimed invention;

Fig. 18 is a plan view illustrating a hollow-fiber membrane sheet of a flat type hollow-fiber membrane module according to an example not forming part of the claimed invention;

Fig. 19 is a perspective view illustrating a manufacturing process of a flat type hollow-fiber membrane module according to an example not forming part of the claimed invention; and

Fig. 20 is a perspective view illustrating a part of a flat type hollow-fiber membrane module according to a modified example of an example not forming part of the claimed invention.

## BEST MODE(S) FOR CARRYING OUT THE INVENTION

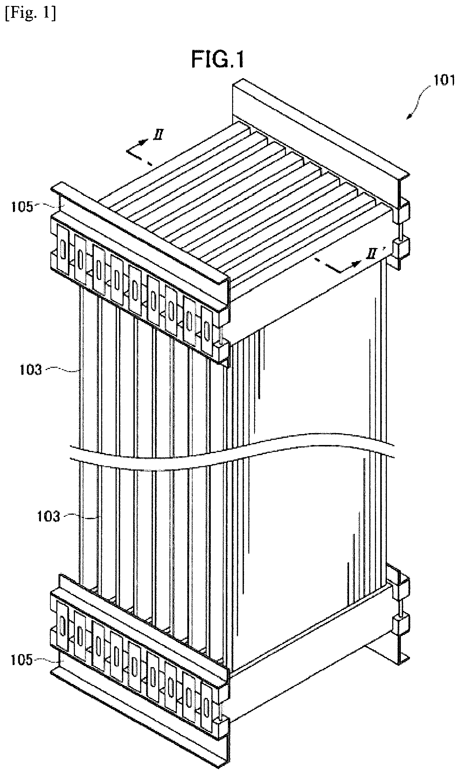

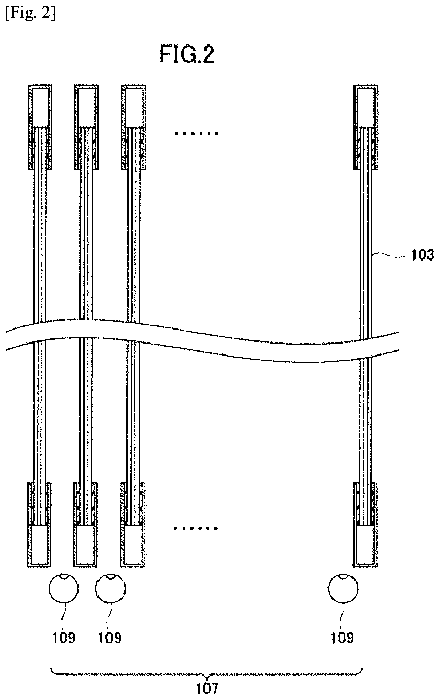

Hereinafter, a hollow-fiber membrane module according to an embodiment of the invention will be described with reference to the drawings. Fig. 1 is a perspective view of a hollow-fiber membrane unit, and Fig. 2 is a cross-sectional view of the II-II' cross-section.

First, as illustrated in Figs. 1 and 2, a hollow-fiber membrane unit 101 includes a plurality of hollow-fiber membrane modules 103 arranged in a constant direction and a holding structure 105 for holding the hollow-fiber membrane module 103 at a predetermined position by holding the upper part and lower part of the hollow-fiber membrane module 103. In addition, an air diffuser 107 for performing aeration is provided at the lower part of the hollow-fiber membrane module 103 arranged.

The plurality of hollow-fiber membrane modules 103 are arranged at a constant interval by the holding structure 105. Moreover, a diffuser pipe 109 of the air diffuser 107 is positioned at the lower part of the interval of the hollow-fiber membrane module 103 arranged so that the air come out from the diffuser pipe 109 rises and penetrates between the hollow-fiber membrane modules 103.

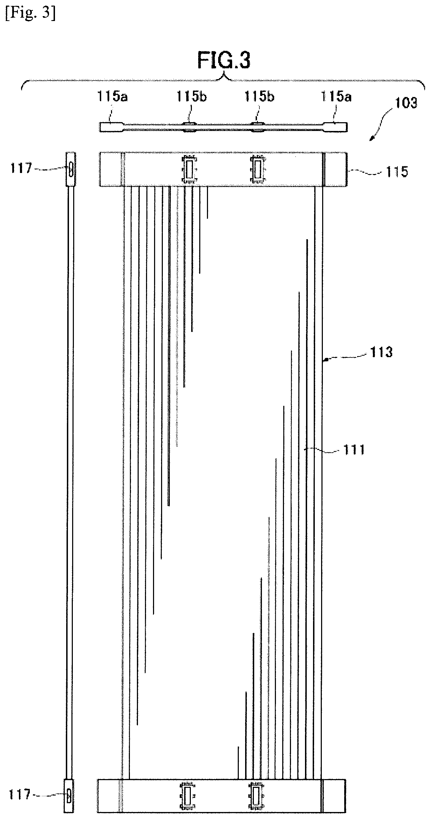

Fig. 3 is the trihedral figure of the hollow-fiber membrane module. The hollow-fiber membrane module 103 includes a hollow-fiber membrane sheet stacked body 113 formed by stacking a hollow-fiber membrane sheet 111 and a pair of cases 115 to fix the hollow-fiber membrane sheet stacked body 113. The hollow-fiber membrane sheet 111 is formed, for example, by arranging a great number of PVDF hollow-fiber membranes in a sheet shape. Moreover, at least one end part of the hollow-fiber membrane is open so that the treated water that is filtered by passing through the hollow-fiber membrane can be discharged from the open end part.

The case 115 for fixing the hollow-fiber membrane sheet stacked body 113 holds the hollow-fiber membrane sheet stacked body 113 at the top and bottom of the hollow-fiber membrane sheet stacked body 113. In addition, an elliptically shaped water intake port 117 for taking out the treated water that is filtered from the case is formed on the end face of the case 115. It is possible to secure the opening area of the water intake port 117 while having a small width of the water intake port 117 (the length in the width direction of the case) by adopting an elliptical shape as the shape of the water intake port 117.

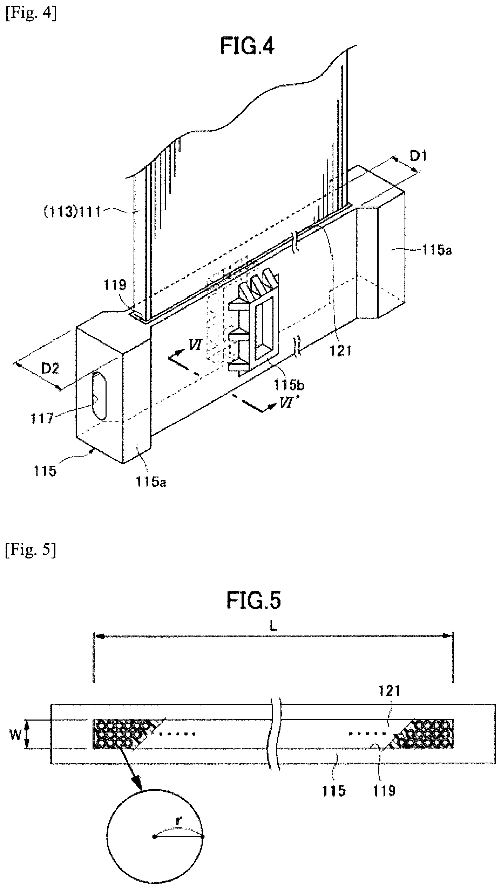

Fig. 4 is an enlarged perspective view illustrating the bottom of the hollow-fiber membrane module.

As illustrated in Fig. 4, the case 115 has an elongated box shape. In addition, an opening for fixation 119 for fixing the hollow-fiber membrane sheet stacked body 113 is formed at the upper part of the case 115. The inside of the opening for fixation 119 is filled with a fixing resin (potting resin) 121 for fixing the hollow-fiber membrane sheet stacked body 113 to the case 115, and the hollow-fiber membrane sheet stacked body 113 and the case 115 are liquid tightly sealed by this fixing resin(potting resin) 121. The length of the opening for fixation 119 is from 200 mm to 1200 mm and preferably from 300 mm to 800 mm, and the width is preferably from 5 to 20 mm in order to maintain the disposition efficiency of the hollow-fiber membrane module 103 and to secure the rigidity to the deformation. Moreover, the thickness of the side wall of the case 115 extending along the opening for fixation 119 is preferably 2 mm or less. It is possible to shorten the distance between the hollow-fiber membrane sheet stacked body 113 fixed in opening for fixation 119 and the flow path of the air from the diffuser pipe 109 formed between the hollow-fiber membrane modules by decreasing the thickness of this side wall. This makes it possible to expose the hollow-fiber membrane sheet stacked body 113 to more air and thus to increase the efficiency of the aeration. Furthermore, it is preferable that the longitudinal direction of the opening for fixation 119 is divided into more than one or a reinforcing member is provided at a predetermined interval in order to enhance the rigidity to the deformation.

The basic width D1 (hereinafter, referred to as the "basic width D1") of the case 115 is 15 mm and preferably 10 mm or less. The case 115 includes a thick wall part 115a having a width wider than the basic width D1 at one end or both ends thereof in addition to this. The thick wall part 115a is the portion that is thickened to be thicker than the basic width D1 in the out-of-plane direction of the hollow-fiber membrane sheet 111. This thick wall part 115a has the same wall thickness as a part of the case 115 having a basic width D1 and is constituted by expanding the internal space thereof in the out-of-plane direction of the hollow-fiber membrane sheet 111. The thick wall part 115a is formed at the end part of the side provided with the water intake port 117. This thick wall part 115a is a portion of the case 115 having a widened width in order to secure the area in the width direction of the water intake port 117. Moreover, the thick wall part 115a is formed on the side provided with the water intake port 117 and the internal space thereof has a wider width than other portions. This makes it possible to increase the opening area of the water intake port 117 and thus to improve the efficiency of taking out water from the case 115. Furthermore, the thickness of the thick wall part 115a is determined such that the thick wall part 115a comes into contact with the thick wall part 115a of the adjacent hollow-fiber membrane module 103 when the hollow-fiber membrane modules 103 are arranged. This allows the thick wall part 115a to function as a spacer between the hollow-fiber membrane modules 103 when the hollow-fiber membrane modules 103 are arranged.

In addition, the case 115 has a reinforcing structure 115b for increasing the rigidity thereof. The reinforcing structure 115b is formed on a side surface of the case 115 and secures the rigidity of the case 115 thinned. This reinforcing structure 115b is fixed to the side surface of the case 115 and is constituted by a relatively hard material having a constant thickness. The wall thickness of the case 115 is substantially increased by fixing the reinforcing structure 115b to the side surface of the case 115 and thus it is possible to increase the rigidity thereof. Furthermore, as the reinforcing structure 115b, those obtained by partly increasing the wall thickness of the case 115 may be used. A plurality of reinforcing structures 115b are arranged along the extending direction of the case 115. Meanwhile, the case 115 may not be provided or may be provided with only one reinforcing structure 115b depending on the length thereof.

The hollow-fiber membrane sheet stacked body 113 is fixed to the opening for fixation 119 of the case 115 as described above, and the hollow-fiber membrane of the hollow-fiber membrane sheet stacked body 113 is disposed so as to upwardly extend from the upper surface of the case 115. In addition, in the case of cutting the hollow-fiber membrane sheet stacked body 113 in the horizontal direction, the cut section of the hollow-fiber membrane is exposed to the cut section thereof, but it has been demonstrated that it is possible to increase the amount of treated water by properly adjusting the membrane area per unit volume when the proportion occupied by the total area of the cross-section of the hollow-fiber membrane is at least 45% on the one surface having an opening for fixation formed thereon according to the experiment conducted by the present inventors or the like. In other words, as illustrated in Fig. 5, the proportion of the sum of the cross-sectional area of the hollow-fiber membrane and the area of cross-section in the horizontal direction of the hollow-fiber membrane module 103 at an arbitrary position is expressed by Equation: $n\pi r2/WL$ (n represents the number of hollow-fiber membrane) when the width of the opening for fixation 119 when viewed from the upper surface is denoted as W, the length is denoted as L, and the radius of the hollow-fiber membrane is denoted as r. It is preferable that this proportion is 45% or more and preferably 50% or more. Meanwhile, it is not required to consider the decrease of the area of the cross-section in the horizontal direction of the hollow-fiber membrane module 103 by the thick wall part 115a in a case in which the case 115 has a thick wall part 115a. Meanwhile, the upper limit of the proportion may be arbitrarily set depending on the size of the module but, according to the claimed invention, is 90% or less, preferably 85% or less in consideration of the sufficient adhesion and fixation of the hollow-fiber membrane.

In addition, the distance between the side wall of the case and the surface of the hollow-fiber membrane sheet stacked body 113 can be relatively short to be 2 mm or less by decreasing the thickness of the wall of the case 115, and this allows the air risen from the diffuser pipe 109 to easily hit the surface of the hollow-fiber membrane sheet stacked body 113. Meanwhile, it is more preferable as the distance is shorter, but the distance is preferably 0.5 mm or more in consideration of the contact between the adjacent cases.

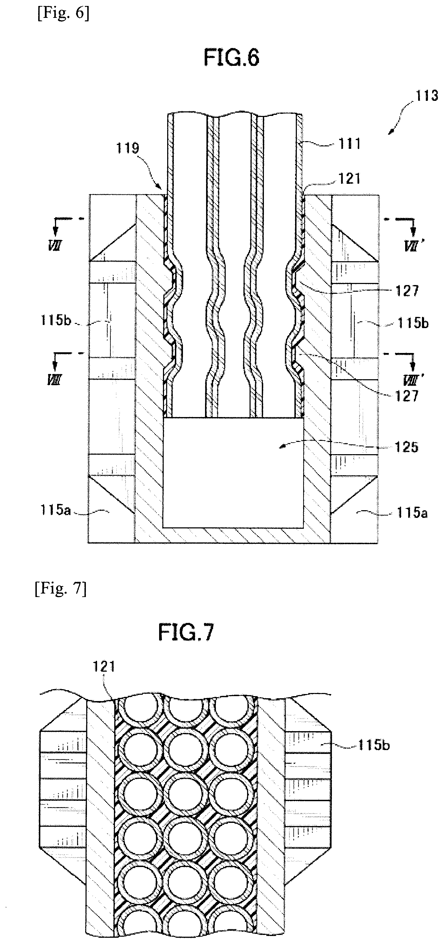

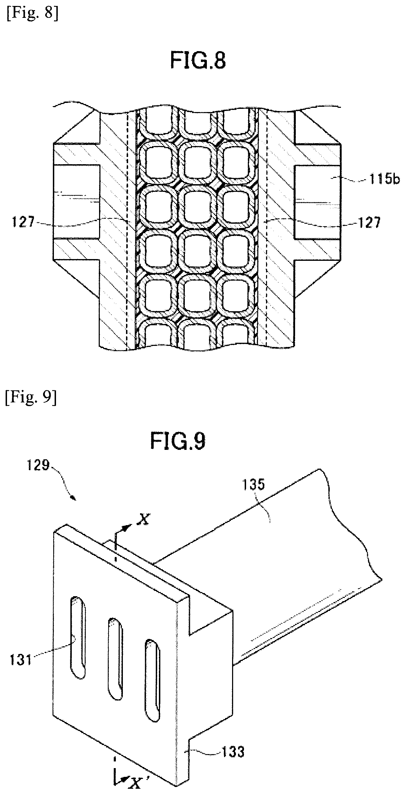

Fig. 6 is a cross-sectional view of the VI-VI' cross-section of Fig. 4, Fig. 7 is a cross-sectional view of the VII-VII' cross-section of Fig. 6, and Fig. 8 is a cross-sectional view of the VIII-VIII' cross-section of Fig. 6.

As illustrated in Fig. 6, the upper of the internal space of the case 115 is substantially closed by the fixing resin (potting resin) 121 and the hollow-fiber membrane, a water collecting path 125 for collecting water filtered through the hollow-fiber membrane is formed at the lower of the internal space thereof. Water filtered through the hollow-fiber membrane flows from the opening of the end part to the water collecting path 125 and flows from the water collecting path 125 to the water intake port 117.

In addition, the case 115 includes a compression means for compressing a part of the hollow-fiber membrane. The compression means is a pair of convex parts 127 extending in the extending direction of the case 115 along the inner wall of the case 115, and the pair of convex parts 127 formed on the facing inner walls are formed at the positions facing each other along the inner wall. The convex part 127 is formed on the portion in contact with the fixing resin (potting resin) 121 embedding the end part of the hollow-fiber membrane of the inner wall of the case 115. Moreover, the hollow-fiber membrane is not deformed in the cut section at the height at which the convex part 127 is not formed as illustrated in Fig. 7. On the other hand the hollow-fiber membrane is pressed by the convex part 127 and thus deformed in the cut section at the height at which the convex part 127 is formed as illustrated in Fig. 8.

The protrusion quantity of the convex part 127 is appropriately set according to the diameter of the hollow-fiber membrane and the flow quantity of water decreases since the internal space of the hollow-fiber membrane is crushed when the protrusion quantity is too large. Consequently, the protrusion quantity of the convex part 127 is preferably a degree in which the width of the portion of the hollow-fiber membrane located between the pair of convex parts 127 facing each other is reduced by 30%. It is not required to decrease the radius or number of the hollow-fiber membrane even in a case in which the width of the case 115 is narrow as the hollow-fiber membrane is compressed in the case 115 by providing such convex parts 127 and thus it is possible to increase the density of the hollow-fiber membrane. In addition, it is possible to improve the strength of the case 115 by providing the convex part 127 along the inner wall of the case 115. Furthermore, it is possible to increase the drawing strength of the fixing resin (potting resin) 121 by providing the convex part 127 on the inner wall of the case 115 and allowing the convex part 127 to bite into the fixing resin (potting resin) 121. It is also possible to form a plurality of convex parts 127 in order to further increase the drawing strength of the fixing resin (potting resin) 121.

In addition, the hollow-fiber membrane unit 101 includes a collective water intake pipe communicating with the plurality of water intake ports 117 of the hollow-fiber membrane module 103 at the same time.

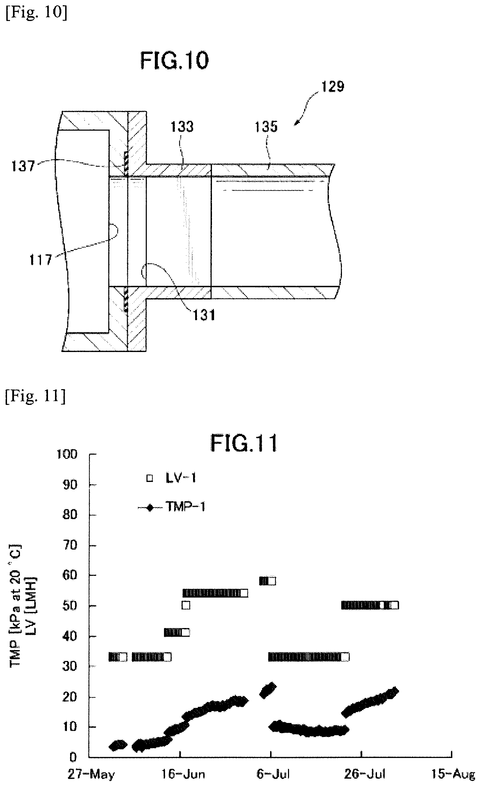

Fig. 9 is a perspective view of the collective water intake pipe, and Fig. 10 is an enlarged cross-sectional view of a part of the hollow-fiber membrane module and a view for describing the attachment state of the collective water intake pipe.

As illustrated in Fig. 9, a collective water intake pipe 129 includes a body 133 having a plurality of inflow openings 131 formed thereon and a water intake pipe 135 extending from this body 133. The plurality of inflow openings 131 are arranged at a predetermined interval, and the size and shape of each of the inflow openings 131 correspond to the size and shape of the water intake port 117 of the hollow-fiber membrane module 103. Moreover, the inflow opening 131 communicates with the water intake pipe 135 inside the body 133. The treated water flowed inside the body from the plurality of inflow openings 131 flows into the water intake pipe 135 and then collectively flows to the downstream side (treated water side).

In addition, as illustrated in Fig. 10, the circumference of the inflow opening 131 is provided with a seal member 137 having an elliptical ring shape so that the space between the inflow opening 131 and the water intake port 117 is sealed by this. Using such a collective water intake pipe 129 makes it possible to collectively take out the treated water from the relatively thin case 115 by a component having a simple structure, and thus it is not required to provide the water intake pipe in accordance with the number of the hollow-fiber membrane module 103.

The hollow-fiber membrane unit 101 includes the plurality of hollow-fiber membrane modules 103 having such a structure as described above, and the respective hollow-fiber membrane modules 103 are arranged at a predetermined interval from each other by the holding structure 105. The gap between the hollow-fiber membrane modules 103 is provided to allow the air risen from the diffuser pipe 109 to pass through. It is not possible to sufficiently perform the physical washing of the hollow-fiber membrane since the bubbles from the diffuser pipe 109 are not sufficiently penetrates therethrough when this gap is too narrow. On the contrary, the density of the hollow-fiber membrane decreases when the gap is too wide. Consequently, the gap between the hollow-fiber membrane modules 103 is preferably set to 3 mm or more and 15 mm or less.

Moreover, according to the experiment conducted by the inventors or the like, it has been demonstrated that it is possible to increase the amount of water treated by the hollow-fiber membrane unit 101 by properly adjusting the membrane area per unit volume when a thickness in the array direction of the hollow-fiber membrane module 103 is 20 mm or less and the proportion occupied by the sum of the cross-section of the hollow-fiber membrane is at least 45% in horizontal cross-section of the location at which the hollow-fiber membrane is fixed to the case 115, and further the physical washing of the hollow-fiber membrane can be sufficiently performed by arranging such hollow-fiber membrane modules 103 at an interval of 3 mm or more and 15 mm or less.

Consequently, according to the hollow-fiber membrane unit 101 described above, it is possible to increase the amount of water treated by the hollow-fiber membrane module which is determined by the membrane area per unit volume and the permeation rate of the water to be treated.

Hereinafter, Examples and Comparative Examples of the invention will be described in detail.

(Example 1)

Two sheets of the hollow-fiber membrane sheets obtained by aligning 160 pieces of a polyvinylidene fluoride hollow-fiber membrane (nominal pore size: 0.4 $\mu$m, outer diameter: 2.8 mm, manufactured by Mitsubishi Rayon Co., Ltd.) in one direction at an effective length of 875 mm was prepared. An ABS case having a thickness of 7.5 mm was prepared as the case. Each of the upper end and lower end of the sheet was fixed to the case using a fixing resin (potting resin) composed of a urethane resin in the state in which two sheets of hollow-fiber membranes having an open upper end and an open lower end are superimposed. The proportion of the sum of the cross-sectional area and the area of the cut section in the horizontal direction of the hollow-fiber membrane of the hollow-fiber membrane module fabricated at this time was 76%. Thereafter, the top and bottom of the hollow-fiber membrane module were fixed such that the hollow-fiber membrane extends in the vertical direction, and the hollow-fiber membrane module was disposed so as to have a gap of the hollow-fiber membrane module of 6 mm, thereby fabricating the hollow-fiber membrane module.

(Example 2)

Two sheets of the hollow-fiber membrane sheets obtained by aligning 160 pieces of a polyvinylidene fluoride hollow-fiber membrane (nominal pore size: 0.4 $\mu$m, outer diameter: 2.8 mm, manufactured by Mitsubishi Rayon Co., Ltd.) in one direction at an effective length of 875 mm was prepared. An ABS case having a thickness of 7.5 mm was prepared as the case. Thereafter, the convex part having a height of 0.3 mm was formed on the inner wall of the case in two stages. Each of the upper end and lower end of the sheet was fixed to the case using a fixing resin (potting resin) composed of a urethane resin in the state in which two sheets of hollow-fiber membranes having an open upper end and an open lower end are superimposed. The proportion of the sum of the cross-sectional area and the area of the cut section in the horizontal direction of the hollow-fiber membrane of the hollow-fiber membrane module fabricated at this time was 76%. Thereafter, the top and bottom of the hollow-fiber membrane module were fixed such that the hollow-fiber membrane extends in the vertical direction, and the hollow-fiber membrane module was disposed so as to have a gap of the hollow-fiber membrane module of 6 mm, thereby fabricating the hollow-fiber membrane module.

(Comparative Example 1)

Five sheets of the hollow-fiber membrane sheets obtained by aligning 160 pieces of a polyvinylidene fluoride hollow-fiber membrane (nominal pore size: 0.4 $\mu$m, outer diameter: 2.8 mm, manufactured by Mitsubishi Rayon Co., Ltd.) in one direction at an effective length of 875 mm was prepared. An ABS case having a thickness of 30 mm was prepared as the case. Each of the upper end and lower end of the sheet was fixed to the case using a fixing resin (potting resin) composed of a urethane resin in the state in which five sheets of hollow-fiber membranes having an open upper end and an open lower end are superimposed. The proportion of the sum of the cross-sectional area and the area of the cut section in the horizontal direction of the hollow-fiber membrane of the hollow-fiber membrane module fabricated at this time was 41%. Thereafter, the top and bottom of the hollow-fiber membrane module were fixed such that the hollow-fiber membrane extends in the vertical direction, and the hollow-fiber membrane module was disposed so as to have a gap of the hollow-fiber membrane module of 15 mm, thereby fabricating the hollow-fiber membrane module.

(Example 4)

Two sheets of the hollow-fiber membrane sheets obtained by aligning 160 pieces of a polyvinylidene fluoride hollow-fiber membrane (nominal pore size: 0.4 $\mu$m, outer diameter: 2.8 mm, manufactured by Mitsubishi Rayon Co., Ltd.) in one direction at an effective length of 875 mm was prepared. An ABS case having a thickness of 7.5 mm was prepared as the case. Each of the upper end and lower end of the sheet was fixed to the case using a fixing resin (potting resin) composed of a urethane resin in the state in which two sheets of hollow-fiber membranes having an open upper end and an open lower end are superimposed. The proportion of the sum of the cross-sectional area and the area of the cut section in the horizontal direction of the hollow-fiber membrane of the hollow-fiber membrane module fabricated at this time was 76%. Thereafter, the top and bottom of the hollow-fiber membrane module were fixed such that the hollow-fiber membrane extends in the vertical direction, and the hollow-fiber membrane module was disposed so as to have a gap of the hollow-fiber membrane module of 2 mm, thereby fabricating the hollow-fiber membrane module.

The test conditions of Examples 1 and 2 and Comparative Example 1 are summarized in Table 1.

[Table 1]

|  |  | Comparative Example 1 | Example 1 | Example 2 |
|---|---|---|---|---|
| Outer diameter of membrane | mm | 2.8 | 2.8 | 2.8 |
| Number of membrane |  | 800 | 320 | 320 |
| Effective length of membrane | mm | 875 | 875 | 875 |
| Length of opening for fixation (L) | mm | 500 | 500 | 500 |
| Thickness of caseWidth of opening for fixation (W) | mm | 26 | 5.2 | 5.2 |
| Height of convex part | mm | - | - | 0.3 |
| Area of membrane | m2 | 6.2 | 2.5 | 2.5 |

(continued)

|  | | Comparative Example 1 | Example 1 | Example 2 |
|---|---|---|---|---|
| Proportion of sum of cross-sectional area and area of cut section in horizontal direction of hollow-fiber membrane | % | 41 | 76 | 76 |

The water permeating performance of the hollow-fiber membrane modules fabricated in (Example 1) and (Example 2) were evaluated under the same conditions. As a result, there was no difference in water permeating performance and a change in the water permeating performance due to the convex shape on the inner wall of the case or the breakage or defect of the hollow-fiber membrane was not confirmed.

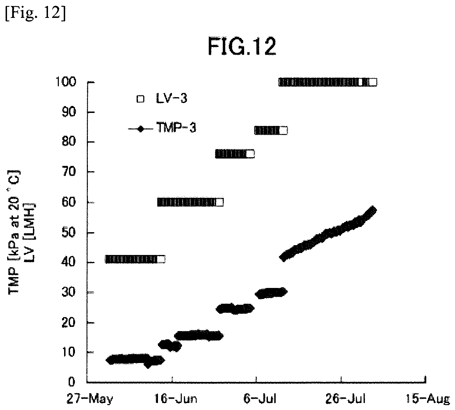

The hollow-fiber membrane modules fabricated in (Example 1) and (Example 2) were disposed in the same water tank and a comparative test was conducted. The test results are presented in Fig. 11 and Fig. 12.

As illustrated in Fig. 11 and Fig. 12, the air diffusion linear velocity per projection floor area of the hollow-fiber membrane module was 230 m/h and the MLSS concentration in the water tank was controlled in the range of from 8,000 to 12,000 mg/L. The hydraulic retention time was 8 hours in the whole system. The filtration linear velocity was changed stepwise, and the change in the differential pressure of membrane filtration at that time was compared. In addition, the hollow-fiber membrane filter fabricated in (Comparative Example 1) was disposed in the same water tank and the comparative test was conducted, but the air diffusion between the hollow-fiber membrane modules was not efficiently performed.

In addition, In Example 2, the breakage of the hollow-fiber membrane or the loss of pressure due to the narrowed inside of the hollow-fiber membrane was not observed although the hollow fiber was pressed and deformed by providing a convex part to the inner wall of the case at the thin membrane fixing part, and thus it was possible to increase the strength of the thin part of the case.

As can be seen from Fig. 11 and Fig. 12, the differential pressure was stable at the filtration linear velocity of (LV) of 35 LMH but tended to increase at 40 LMH or more in Comparative Example 1. On the other hand, the differential pressure was stable even at the filtration linear velocity of (LV) of 85 LMH but tended to increase at 100 LMH or more in Examples 2 and 3.

As described above, it was possible to significantly improve the amount of treated water per unit volume in Example 1 above compared to Comparative Example 1.

Next, the hollow-fiber membrane module according to an example not forming part of the claimed invention, but representing background art that is useful for understanding the invention, will be described.

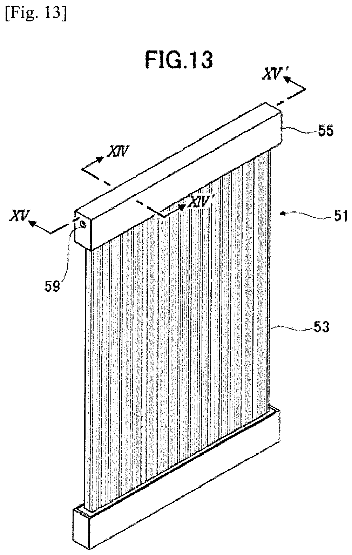

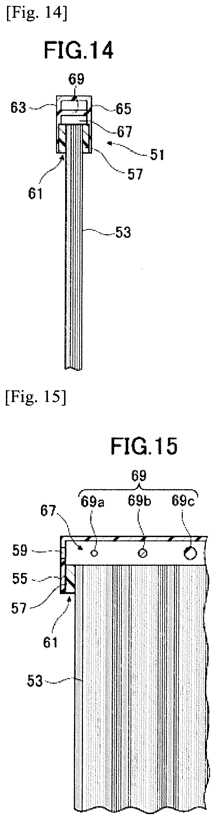

Fig. 13 is a perspective view of the hollow-fiber membrane module according to the example, Fig. 14 is a cross-sectional view of the XIV-XIV' cross-section of Fig. 13, and Fig. 15 is a cross-sectional view of the XV-XV' cross-section of Fig. 13.

As illustrated in Fig. 13 to Fig. 15, a hollow-fiber membrane module 51 includes a hollow-fiber membrane stacked body 53 formed by stacking a hollow-fiber membrane sheet and a water collecting member 55 for collecting the water filtered by the hollow-fiber membrane stacked body 53. The hollow-fiber membrane stacked body 53 is liquid tightly fixed to a water-collecting member 55 using a fixing resin 57.

The hollow-fiber membrane sheet is a hollow-fiber membrane sheet formed by arranging and binding a great number of hollow-fiber membranes in a sheet shape, and the hollow-fiber membrane stacked body 53 is constituted by stacking the plurality of hollow-fiber membrane sheets. Moreover, at least one end part of the hollow-fiber membrane constituting the hollow-fiber membrane sheet is cut in the direction perpendicular to the extending direction of the hollow-fiber membrane, and the end part of the hollow-fiber membrane is in an open state.

The material of the hollow-fiber membrane is not particularly limited, and examples thereof may include a polysulfone-based resin, polyacrylonitrile, a cellulose derivative, a polyolefin such as polyethylene or polypropylene, a fluorine-based resin such as polyvinylidene fluoride or polytetrafluoroethylene, a chlorine-based resin such as polyvinyl chloride or polyvinylidene chloride, a polyamide, a polyester, a polymethacrylate, and a polyacrylate. In addition, the material may be a copolymer of these resins or one obtained by introducing a substituent into a part thereof. Furthermore, the material may be one obtained by mixing two or more kinds of resins. Meanwhile, the pore size, porosity, thickness, outer diameter, or the like of the hollow-fiber membrane are not particularly limited as long as a hollow-fiber membrane is usable as a filtration membrane, but, for example, the outer diameter thereof is preferably in a range of from 20 to 4000 $\mu$m, the pore size thereof is preferably in a range of from 0.001 to 5 $\mu$m, the porosity thereof is preferably in a range of from 20 to 90%, and the thickness thereof is preferably in a range of from 5 to 300 $\mu$m.

The water collecting member 55 has a long shape extending along the width direction of the hollow-fiber membrane sheet constituting the hollow-fiber membrane stacked body 53. In addition, a water intake port 59 for collecting the purified water is formed at the end face of the longitudinal direction of the water collecting member 55. Moreover, the water collecting member 55 includes an opening part 61 leading to the inside, and one end of the hollow-fiber membrane stacked body 53 is inserted in this opening part 61. Furthermore, the water collecting member 55, in addition to the opening part 61 leading to the inside of the water collecting member 55, is equipped with a pair of side walls 63 and 65 extending from the opening part 61 on both sides of the opening part 61 and a water collecting channel 67 which is formed between the side walls 63 and 65 and communicates with the opening of the end part of the hollow-fiber membrane. A reinforcing structure 69 which is constituted with a plurality of columnar bodies 69a, 69b, 69c, ... for coupling the pair of side walls 63 and 65 with each other is provided in the water collecting channel 67.

The material for forming the water collecting member 55 may be any one exhibiting mechanical strength and durability, and it is possible to use, for example, a polycarbonate, a polysulfone, a polyolefin, polyvinyl chloride (PVC), an acrylic resin, an ABS resin, a modified polyphenylene ether (modified PPE), a polyester resin such as a PET resin and a PBT resin, or the like. A hydrocarbon-based resin such as a polyolefin which is completely combustible without emitting a toxic gas by combustion is preferable in a case in which incineration is required after use.

The reinforcing structure 69 couples the side walls 63 and 65 with each other in the water collecting channel 67 using the plurality of columnar bodies 69a, 69b, 69c, .... The columnar bodies 69a, 69b, 69c, ... extend in the plane direction of the side walls 63 and 65, that is, the width direction of the water collecting member 55. Moreover, the plurality of columnar bodies 69a, 69b, 69c, ... are arranged along the extending direction of the water collecting member 55. The plurality of columnar bodies 69a, 69b, 69c, ... are preferably provided at the position at which the displacement is greatest when a positive pressure or a negative pressure is applied to the water collecting member 55, that is, the central part in the height direction of the water collecting channel 67. Furthermore, the columnar bodies 69a, 69b, 69c, ... may be provided, for example, in the vicinity of the interface of the fixing resin 57 and the side walls 63 and 65 of the water collecting member since stress is easily applied to this position due to the structure of the water collecting member 55. Each of the columnar bodies 69a, 69b, 69c, ... has a streamlined shape such as a circular cross-section or an elliptical cross-section in order to decrease the resistance force to the flow of filtered water in the water collecting channel. In addition, the cross-section of each of the columnar bodies may have an asymmetrical shape or an acute-angled shape having an acute angle toward the water intake port 59. Moreover, the projected area of the plurality of the columnar bodies 69a, 69b, 69c, ... arranged along the extending direction of the water collecting channel 67 when viewed from the longitudinal direction of the water collecting member 55 is smaller as the columnar body is closer to the water intake port 59 and greater as the columnar body is farther from the water intake port.

Such a water collecting member 5 may be formed as an integrally molded article or by combining two components in order to secure the bonding strength of the side walls 63 and 65 and the columnar bodies 69a 69b, 69c, ....

In the case of forming a water collecting member by two components, a first component having at least one side wall and a columnar body extending therefrom and a second component having the other side wall are prepared, and then the bonding part between these first component and second component and the tip of the columnar body and the side wall of the second component are respectively bonded by, for example, heat welding, ultrasonic welding, vibration welding, laser welding, adhesion.

Hereinafter, the action of the hollow-fiber membrane module 51 will be described.

The hollow-fiber membrane module 51 is impregnated with water to be treated in the case of filtering the water to be treated by the hollow-fiber membrane module 51. Thereafter, a pump is coupled to the water intake port 59 of the hollow-fiber membrane module 51 and actuated, and a negative pressure is applied to the inside of the water collecting channel 67 and the hollow-fiber membrane of the hollow-fiber membrane module 51. This allows water to be treated surrounding the hollow-fiber membrane to be drawn into the hollow-fiber membrane and thus to be filtered by the hollow-fiber membrane. Thereafter, the filtered water passes through the hollow-fiber membrane to be collected in the water collecting channel 67 and then passes through the water intake port 59 to be discharged from the hollow-fiber membrane module 51. A negative pressure is applied to the inside of the water collecting channel 67 and thus force to contract the water collecting member 55 is applied at the time of filtration treatment by the hollow-fiber membrane module 51, but the side walls 63 and 65 of the water collecting member 55 are coupled with each other by the reinforcing structure 69 so as to be reinforced and thus the deformation of the side walls 63 and 65 can be relieved.

In addition, a washing liquid is introduced into the water collecting channel 67 and the hollow-fiber membrane via the water intake port 59 and also a positive pressure is applied to the inside of these in the case of washing the hollow-fiber membrane module 51. This makes it possible to remove the contaminants adhered to the fine pores of the hollow-fiber membrane. A positive pressure is applied to the inside of the water collecting channel 67 and thus force to expand the water collecting member 55 is applied at the time of washing the hollow-fiber membrane module 51, but the side walls 63 and 65 of the water collecting member 55 are coupled with each other by the reinforcing structure 69 so as to be reinforced and thus the deformation of the side walls 63 and 65 can be relieved.

As described above, according to the hollow-fiber membrane module 51 according to the example, it is possible to improve the pressure resistant performance of the hollow-fiber membrane module 51 by a simple structure in which the columnar bodies 69a, 69b, 69c, ... are provided in the water collecting channel 67. In addition, it is not required to mix a reinforcing agent with the water collecting member 55 or to use a special material as the water collecting member 55 when using the reinforcing structure 69 having the columnar bodies 69a, 69b, 69c, ..., and thus it is eliminated that the hollow-fiber membrane module 51 may not be used depending on the substance contained in the water to be treated. This makes it possible to improve the degree of freedom of the use application of the hollow-fiber membrane module 51.

Hereinafter, Example and Comparative Example of the invention will be described in detail.

The comparative test was conducted without using the hollow-fiber membrane in Comparative Example and Example in order to evaluate the strength of the following case to the limit.

(Example 3)

Two cases having external dimensions of L340mm × W6mm × H50mm and a divided structure were prepared, and these were superimposed and welded to fabricate an ABS water collecting member of L340mm × W12mm × H50mm. An opening part of L300mm × W6mm × 20mm and a water collecting channel of L300mm × W6mm × H20mm corresponding to the opening part were formed on the water collecting member. In addition, a water intake port having an inner diameter of φ6mm was formed on both end parts of the water collecting member. Moreover, five columnar bodies having a circular cross-section with an outer diameter of φ6mm were evenly formed at right and left and top and bottom of the water collecting channel. The water collecting member and the coupling structure were welded by a solvent adhesive (ESLON No.73). The stacked body of hollow-fiber membrane sheet was fixed to the water collecting member using a polyurethane resin (4423/4426 Nippon Polyurethane) as the fixing resin of the hollow-fiber membrane. Thereafter, the water intake port was sealed, pressure was applied to the inside of the water collecting passage, and the applied pressure and the maximum displacement of the water collecting member was measured. In addition, the maximum pressure at which the water collecting member is fractured by the pressurization was measured.

(Comparative Example 3)

The same water collecting member for evaluation as that of Example except that the water collecting channel does not have a reinforcing structure was fabricated. Thereafter, the water intake port of the water collecting member was sealed, pressure was applied to the water collecting member, and the applied pressure and the maximum displacement of the case was measured. In addition, the maximum pressure at which the water collecting member is fractured by the pressurization was measured.

The measurement results in Example 3 and Comparative Example 3 above are presented in Table 2.

[Table 2]

|  | Dimension of water collecting member (L × W × H) | Dimension of columnar body (mm) | Deformation quantity of water collecting member (mm/0.1 MPa) | Pressure at the time of fracture (MPa) |
|---|---|---|---|---|
| Example | 340 × 12 × 50 | φ6mm × 5 pieces | 0.2 | 0.50 |
| Comparative Example | 340 × 12 × 50 | - | 0.8 | 0.35 |

As can be seen from the above, it is verified that the water collecting member of Example 3 in which a columnar body was formed on the water collecting channel exhibits a less deformation quantity and higher pressure resistance than the water collecting member of Comparative Example 3.

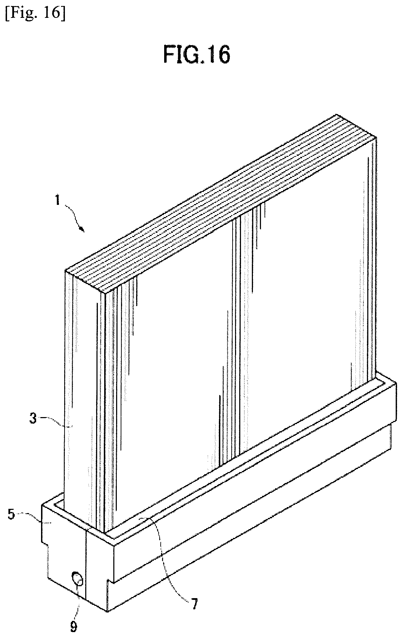

Fig. 16 is a perspective view illustrating a flat type hollow-fiber membrane module according to an example not forming part of the claimed invention, but useful for understanding the invention.

First, as illustrated in Fig. 16, a flat type hollow-fiber membrane module 1 includes a stacked body 3 formed by bundling hollow-fiber membranes and a water collecting member 5 to which this hollow-fiber membrane stacked body 3 is fixed.

The hollow-fiber membrane stacked body 3 is constituted by stacking a plurality of hollow-fiber membrane sheets formed by arranging and binding a great number of hollow-fiber membranes in a sheet shape. This hollow-fiber membrane stacked body 3 is fixed to the water collecting member 5 using a fixing resin 7. The number of sheets constituting the hollow-fiber membrane stacked body 3 is preferably from 1 to 15 sheets and even more preferably from 2 to 10 sheets.

The material of the hollow-fiber membrane constituting the hollow-fiber membrane stacked body 3 is not particularly limited, and examples thereof may include a polysulfone-based resin, polyacrylonitrile, a cellulose derivative, a polyolefin such as polyethylene or polypropylene, a fluorine-based resin such as polyvinylidene fluoride or polytetrafluoroethylene, a chlorine-based resin such as polyvinyl chloride or polyvinylidene chloride, a polyamide, a polyester, a polymethacrylate, and a polyacrylate. In addition, the material may be a copolymer of these resins or one obtained by introducing a substituent into a part thereof. Furthermore, the material may be one obtained by mixing two or more kinds of resins. Meanwhile, the pore size, porosity, thickness, outer diameter, or the like of the hollow-fiber membrane are not particularly limited as long as a hollow-fiber membrane is usable as a filtration membrane, but, for example, the outer diameter thereof is preferably in a range of from 20 to 4000 $\mu$m, the pore size thereof is preferably in a range of from 0.001 to 5 $\mu$m, the porosity thereof is preferably in a range of from 20 to 90%, and the thickness thereof is preferably in a range of from 5 to 300 $\mu$m.

The arrangement direction of the hollow-fiber membrane is not particularly limited, but it is preferable that the hollow-fiber membrane is arranged roughly parallel to the flow direction of the liquid to be treated. In such a case, there is an effect of reducing the deposition or strain of the impurities onto the hollow-fiber membrane since there is no obstacle such as the hollow-fiber membrane which is perpendicular to the flow direction when the impurities to pass through between the great number of hollow-fiber membranes, for example, in the case of a highly contaminated liquid in which the liquid to be treated contains a great amount of impurities.

Furthermore, the arrangement direction of the hollow-fiber membrane is preferably that the lengthwise direction of the hollow-fiber membrane is the longitudinal direction, namely the up and down direction. In such a case, a synergistic effect with the effect of preventing the deposition of impurities described above is exhibited since, for example, it is possible to roughly parallelize the upward flow direction of the liquid to be treated that is generated at the time of air bubbling washing often used to wash the impurities and the extending direction of the hollow-fiber membrane.

It is possible to use an epoxy resin, an unsaturated polyester resin, a polyurethane resin, a silicone-based filler, various kinds of hot melt resins as the fixing resin 7 of the hollow-fiber membrane stacked body 3, and the fixing resin 7 can be appropriately selected. In addition, the initial viscosity of the fixing resin is from 3,000 to 200,000 mPa·s, preferably from 5,000 to 100,000 mPa·s, and even more preferably from 10,000 to 50,000 mPa·s. The viscosity can be appropriately selected depending on the outer diameter of the hollow-fiber membrane and the number of sheets or the like constituting the hollow-fiber membrane stacked body.

The water collecting member 5 has an elongated shape extending along the width direction of the hollow-fiber membrane sheet constituting the hollow-fiber membrane stacked body 3. In addition, a water collecting port 9 for collecting the purified water is formed on the end face in the longitudinal direction of the water collecting member 5.

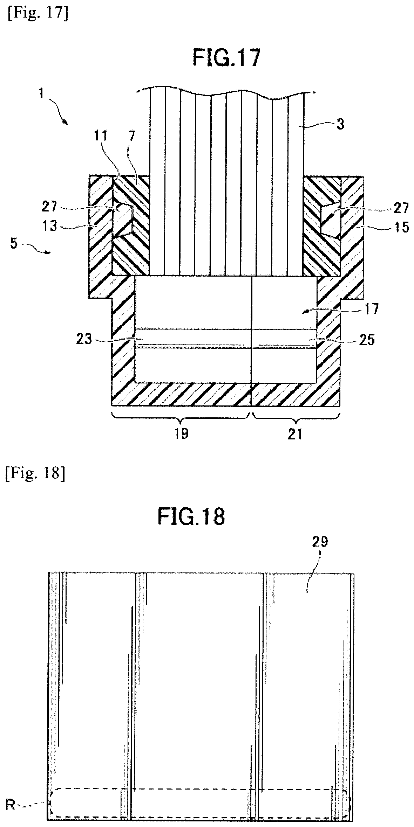

Fig. 17 is a cross-sectional view illustrating a cross-section of a water collecting member not forming part of the claimed invention, but useful for understanding the invention. This cross-sectional view illustrates a cross-section of the water collecting member in the direction perpendicular to the longitudinal direction (width direction of the water collecting member).

As illustrated in Fig. 17, the water collecting member 5 has an opening part 11 leading to the inside, and one end of the hollow-fiber membrane stacked body 3 is inserted in this opening part 11. Furthermore, the water collecting member 5, in addition to the opening part 11 leading to the inside of the water collecting member 5, is equipped with a pair of side walls 13 and 15 extending from the opening part 11 on both sides of the opening part 11 and a water collecting passage 17 formed on the side opposite to the opening part 11 with respect to the side walls 13 and 15. The water collecting member 5 is formed by bonding two members of a first member 19 and a second member 21. Each of the first member 19 and the second member 21 has a shape obtained by dividing the water collecting member 5 in the longitudinal direction at one location in the width direction of the water collecting member 5. The water collecting member 5 is integrally formed by bonding the bonding parts 23 and 25 which are formed on the first member 19 and the second member 21, respectively and in a cylindrical shape, and the bonding surfaces (not illustrated in the drawing) formed on both sides in the longitudinal direction of the first member 19 and the second member 21 to each other.

As the method for bonding the first member 19 and the second member 21 of the water collecting member 5, it is possible to use heat welding, ultrasonic welding, vibration welding, laser welding, adhesion or the like. In addition, it is possible to improve the reliability of airtightness at the bonding parts of the first member 19 and the second member 21, for example, by sandwiching a seal member such as a rubber flat packing between the first member 19 and the second member 21. Moreover, a method may be adopted in which the seal member sandwiched between the first member 19 and the second member 21 is fastened by a mechanical fastening means (for example, bolts and nuts).

The opening part 11 of the water collecting member 5 has a dimension enough to accommodate the hollow-fiber membrane stacked body 3. In addition, the hollow-fiber membrane stacked body 3 is fixed in the region sandwiched by the side walls 13 and 15 on the water collecting passage 17 side of the opening part 11 by the fixing resin 7. Moreover, a protruding part 27 for reinforcement is provided on the side walls 13 and 15, and the protruding part 27 has a shape to bite into the fixing resin 7 portion. The opening of the end part of the hollow-fiber membrane is exposed on the water collecting passage 17 side of the hollow-fiber membrane stacked body 3, and water purified by the hollow-fiber membrane flows into the water collecting passage 17.

Here, the water collecting passage 17 refers to the space enclosed by the first member 19, the second member 21, the fixing resin 7, and the hollow-fiber membrane stacked body 3 and receives the purified water filtered by the hollow-fiber membrane. The end part in the longitudinal direction of the water collecting passage 17 communicates with the water collecting port 9 of the water collecting member 5.

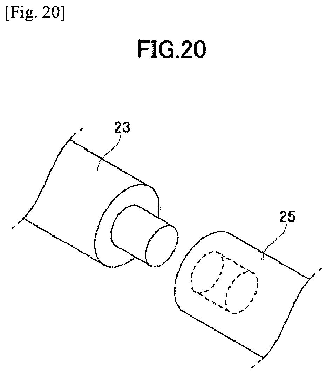

In addition, it is possible to dispose the cylindrical-shaped bonding parts 23 and 25 extending in the width direction of the water collecting member 5 inside the water collecting passage 17 if necessary. These bonding parts 23 and 25 have the function of a reinforcing rib for suppressing the deformation of the side walls 13 and 15 by the positive pressure/negative pressure applied to the inside of the flat type hollow-fiber membrane module 1 and extend at right angles to the direction in which the water collecting passage 17 extends. Moreover, it is preferable that the bonding parts 23 and 25 have a cylindrical shape in terms that the bonding parts 23 and 25 reduce the pressure loss due to the water flow in the water collecting passage 17. In addition, the bonding parts 23 and 25 may have a fitted shape as illustrated in Fig. 20.

The material of the first member 19 and the second member 21 constituting the water collecting member 5 may be one exhibiting mechanical strength and durability, and it is possible to use a polycarbonate, a polysulfone, a polyolefin, PVC (polyvinyl chloride), an acrylic resin, an ABS resin, a modified PPE (polyphenylene ether), a PET resin, a PBT resin or the like. A hydrocarbon-based resin such as a polyolefin which is completely combustible without emitting a toxic gas by combustion is preferable in a case in which incineration is required after use.

In such a flat type hollow-fiber membrane module 1, the water purified by the hollow-fiber membrane flows into the water collecting passage 17 through the opening formed at the end of the hollow-fiber membrane, and further the water flowed into the water collecting passage 17 flows toward the downstream side from the water collecting port 9 by applying a negative pressure to the inside of the flat type hollow-fiber membrane module 1.

Next, a method for manufacturing the flat type hollow-fiber membrane module 1 described above will be described in detail.

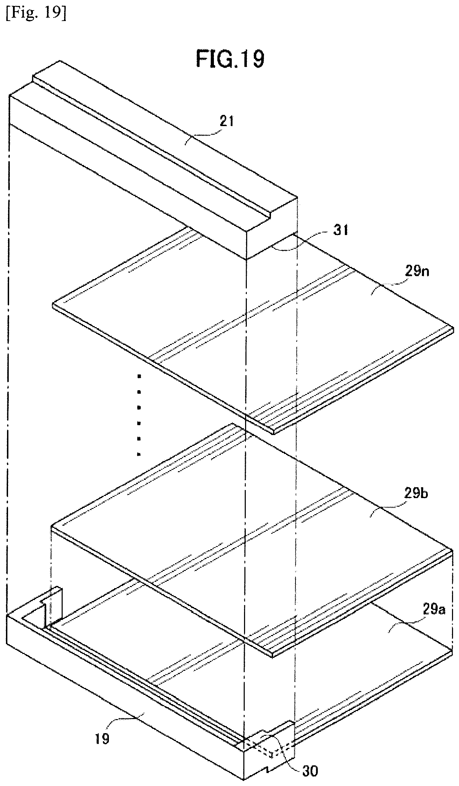

Fig. 18 is a plan view illustrating a hollow-fiber membrane sheet of a flat type hollow-fiber membrane module, and Fig. 19 is a perspective view illustrating a manufacturing process of a flat type hollow-fiber membrane module, both not forming part of the claimed invention, but useful for understanding the invention.

The hollow-fiber membrane sheet 29 is constituted by arranging a great number of hollow-fiber membranes side by side and binding one ends of the hollow-fiber membranes to one another. It is possible to use tape, an adhesive, thermal fusion or the like as the method for binding the hollow-fiber membranes to one another.

In addition, in the method for manufacturing the flat type hollow-fiber membrane module 1, first, a plurality of hollow-fiber membrane sheets 29 are prepared, and a fixing resin is coated in a region R of the vicinity of one side of the hollow-fiber membrane sheet 29a of the first sheet. The region R to be coated with a fixing resin is a region of the vicinity of either one of the end parts in the extending direction of the hollow-fiber membrane of the hollow-fiber membrane sheet 29.

Next, a hollow-fiber membrane sheet 29b of the second sheet having the same dimensions as the hollow-fiber membrane sheet 29a of the first sheet is stacked on the hollow-fiber membrane sheet 29a of the first sheet so as to be exactly superimposed on the hollow-fiber membrane sheet 29a of the first sheet. The hollow-fiber membrane stacked body 3 is manufactured by performing these processes of coating a fixing resin and superimposing the hollow-fiber membrane sheet a predetermined number of times.

As a method for coating a fixing resin, it is desirable to coat while moving the nozzle head part of the ejection apparatus installed with a pump capable of constant ejection such as a gear pump, a positive load pump, and a mono pump at least in one axis (horizontal) direction at a constant speed from the viewpoint of performing quantitative coating. In addition, it is also possible to manually coat using a syringe (for example, SS-20ESZ manufactured by TERUMO CORPORATION), a brush, a spatula or the like.

As the coating shape of the fixing resin, it is desirable to coat in a film shape or at least one piece of bead shape. In addition, it is possible to adopt a method to spread the coated fixing resin with a spatula/brush or the like to be thin.

Next, the fixing resin is coated on one side surface of the ends on the side coated with the fixing resin of the hollow-fiber membrane stacked body 3 and/or the side wall 13 of the first member 19 of the water collecting member 5. Thereafter, the end on the side coated with the fixing resin of the hollow-fiber membrane stacked body 3 is disposed on the side wall 13 of the first member 19 of the water collecting member 5. At this time, the hollow-fiber membrane stacked body 3 is positioned at the position at which the end face of the end coated with the fixing resin of the hollow-fiber membrane stacked body 3 protrudes from the opening of the upper part of the water collecting passage 17 by from 0.5 to 15 mm.

Next, the fixing resin is coated on the other side surface of the ends on the side coated with the fixing resin of the hollow-fiber membrane stacked body 3 and/or the side wall 15 of the first member 21 of the water collecting member 5. In addition, the bonding part 23 and the bonding surface 30 of the first member 19 and the bonding part 25 and the bonding surface 31 of the second member 21 are coated with a bonding adhesive. Thereafter, the second member 21 is bonded to the first member 19 and the hollow-fiber membrane stacked body 3 so as to be superimposed thereon. At this time, the bonding adhesive may be the same as the fixing resin or a different kind, and it can be appropriately selected depending on the purpose.

The hollow-fiber membrane sheets 29 are superimposed a predetermined number of times or more and adhered to one another as described above. Thereafter, the hollow-fiber membrane sheets 29 are sandwiched by the water collecting member 5 formed in a divided form, and this makes it possible to easily spread the fixing resin between the hollow-fiber membrane sheets 29. In addition, it is possible to easily provide the protruding part 27 and the bonding parts 23 and 25 to the side wall when the first member 19 and the second member 21 are injection molded by forming the water collecting member 5 by the two members of the first member 19 and the second member 21. Moreover, it is possible to improve the adhesive strength by the anchor effect since the protruding part 27 is allowed to bite into the fixing resin 7 of the hollow-fiber membrane stacked body 3 by providing this protruding part 27. This makes it possible to firmly fix the hollow-fiber membrane stacked body 3 to the water collecting member 5 via the fixing resin 7. Furthermore, it is possible to prevent the fixing resin 7 from dislocating from the water collecting member 5 when a negative pressure is applied to the inside of the water collecting member 5 and when the pressurized water or air flows into the flat type hollow-fiber membrane module 1 at the time of washing the hollow-fiber membrane and thus a positive pressure is applied to the inside of the water collecting member 5 by fixing the hollow-fiber membrane stacked body 3 to the water collecting member 5 by the protruding part 27. In addition, it is possible to prevent the fixing resin 7 from dislocating from the water collecting member 5 and the water collecting members 19 and 21 from dislocating from each other 5 when a negative pressure is applied to the inside of the water collecting member 5 and when the pressurized water or air flows into the flat type hollow-fiber membrane module 1 at the time of washing the hollow-fiber membrane and thus a positive pressure is applied to the inside of the water collecting member 5 by providing the bonding parts 23 and 25.

Meanwhile, the hollow-fiber membrane stacked body 3 is formed by a plurality of hollow-fiber membrane sheets 29a in the embodiment described above, but it is also possible to sandwich one sheet of the hollow-fiber membrane sheet between the first member and the second member.

Next, a modified example of the method for manufacturing a flat type hollow-fiber membrane module will be described, not forming part of the claimed invention, but useful for understanding the invention.

In the manufacturing method of the flat hollow-fiber membrane module 1 according to the modified example, first, a fixing resin is coated on the side wall 13 of the first member 19 of the water collecting member 5, and the hollow-fiber membrane sheet 29a of the first sheet is placed such that the region R of the vicinity of one side thereof is superimposed on the portion coated with the fixing resin described above. Subsequently, the region R of the vicinity of one side of the hollow-fiber membrane sheet 29a of the first sheet is coated with the fixing resin.

Next, the hollow-fiber membrane sheet 29b of the second sheet having the same dimensions as the hollow-fiber membrane sheet 29a of the first sheet is stacked on the hollow-fiber membrane sheet 29a of the first sheet so as to be exactly superimposed on the hollow-fiber membrane sheet 29a of the first sheet. Thereafter, the process of coating a fixing resin and the process of superimposing a hollow-fiber membrane sheet are repeated a predetermined number of times.

Next, the fixing resin is coated on the region R of the vicinity of one side of the hollow-fiber membrane stacked body 3, and the bonding part 23 and the bonding surface 30 of the first member 19 and/or the bonding part 25 and the bonding surface 31 of the second member 21 are coated with a bonding adhesive. Thereafter, the second member 21 is bonded to the first member 19 and the hollow-fiber membrane stacked body 3 so as to be superimposed thereon. At this time, the bonding adhesive may be the same as the fixing resin or a different kind, and can be appropriately selected depending on the purpose.

It is possible to obtain the same effect as that of the method for manufacturing a flat type hollow-fiber membrane module described above even according to such a modified example.

In addition, using such a manufacturing method makes it possible to perform the work to fix the water collecting member at both ends of the hollow-fiber membrane at the same time in the state in which the hollow-fiber membrane is horizontally arranged, for example, in the case of providing the water collecting member at both ends of the hollow-fiber membrane. Moreover, in the manufacturing method described above, the fixing resin is directly coated on the hollow-fiber membrane sheet, and thus it is not required to consider the time until the fixing resin spreads through between the hollow-fiber membranes and it is possible to use a fixing resin having a relatively high viscosity and a fast cure rate. In other words, in the manufacturing method used in the related art, it is required to use a fixing resin having a slow cure rate so as not to be cured until the fixing resin spreads through between the hollow-fiber membranes, but in the manufacturing method described above, it is possible to use a fixing resin having a relatively fast cure rate since it is not required to consider the time until the fixing resin spreads through between the hollow-fiber membranes. Furthermore, in the manufacturing method described above, it is not required a process of cutting the end part of the hollow-fiber membrane stacked body. This makes it possible to significantly shorten the time required for manufacturing a flat type hollow-fiber membrane module.

In addition, it is possible to decrease the gap between the hollow-fiber membrane sheets since it is not required to provide a gap to spread the fixing resin between the hollow-fiber membranes by adopting the process of sequentially stacking the hollow-fiber membrane sheets. This makes it possible to increase the packing density of the hollow-fiber membranes in the flat type hollow-fiber membrane module.

Bonding by an adhesive is mentioned in the present example, but bonding by welding is also adoptable.
In addition, it is possible to easily provide the reinforcing structure, namely the protruding part and the reinforcing rib to the water collecting member at the time of injection molding when the water collecting member is constituted by two members.

EXPLANATIONS OF LETTERS OR NUMERALS

| 1 | hollow-fiber membrane module |
| 3 | hollow-fiber membrane stacked body |
| 5 | water collecting member |
| 7 | fixing resin |
| 17 | water collecting passage |
| 19 | first member |
| 21 | second member |
| 29 | hollow-fiber membrane sheet |
| 51 | hollow-fiber membrane module |
| 53 | hollow-fiber membrane stacked body |
| 55 | water collecting member |
| 57 | fixing resin |
| 59 | water intake port |
| 63 | and 65 side wall |
| 67 | water collecting channel |
| 69 | reinforcing structure |
| 69a, 69b, and 69c | columnar body |
| 101 | hollow-fiber membrane unit |
| 103 | hollow-fiber membrane module |
| 107 | air diffuser |
| 111 | hollow-fiber membrane sheet |
| 113 | hollow-fiber membrane sheet stacked body |
| 115 | case |
| 115a | thick wall part |
| 115b | reinforcing structure |
| 117 | water intake port |
| 119 | opening for fixation |
| 121 | fixing resin (potting resin) |
| 125 | water collecting path |
| 127 | convex part |
| 129 | collective water intake pipe |
| 131 | inflow opening |
| 135 | water intake pipe |

**Claims**

1. A hollow-fiber membrane module (103) comprising a hollow-fiber membrane sheet formed by arranging a hollow-fiber membrane in a sheet shape or a stacked body (113) thereof and a case-shaped water collecting member (115) holding the hollow-fiber membrane sheet or the stacked body thereof, the water collecting member (115) having an elongated box shape,

   wherein one surface of the water collecting member (115) has an opening part (119) for fixing the hollow-fiber membrane sheet stacked body (113) therein, the inside of the opening part (119) being filled with a fixing resin (121) for fixing the hollow-fiber membrane sheet stacked body (113) to the water collecting member (115), and the hollow-fiber membrane sheet stacked body (113) and the water collecting member (115) being liquid tightly sealed by this fixing resin (121),
   wherein the water collecting member (115) has a length, width and height dimension,
   wherein the water collecting member (115) has a thickness, corresponding to a width, of 20 mm or less along an out-of-plane direction of the hollow-fiber membrane sheet, a basic width (D1) of the water collecting member (115) is 15 mm or less, and a thickness of the side wall of the water collecting member (115) extending along the opening for fixation in the out-of-plane direction of the hollow-fiber membrane sheet is 2 mm or less, wherein the water collecting member (115) has a water collecting path (125) for collecting treated water filtered through a hollow-fiber membrane, and a water intake port (117), the water intake port (117) being in an elliptical shape having a minor axis extending in the out-of-plane direction of the hollow-fiber membrane sheet, the water intake port (117) being formed on at least one end face of the water collecting member (115), and wherein a thick wall part (115a) having a thickened thickness (D2) which is thicker than the basic width (D1) in the out-of-plane direction of the hollow-fiber membrane sheet of the water collecting member (115) is equipped on the at least one end face of the water collecting member (115) having the water intake port (117) formed thereon, and a proportion of a total area of a cross-section of the hollow-fiber membrane in a horizontal cross-section of the opening part for fixation (119) at an arbitrary position is at least 45% and the upper limit of the proportion is 90% or less, and is expressed by Equation:

$$n\pi r2/WL$$

wherein n represents the number of hollow-fiber membrane when the width of the opening part for fixation (119), when viewed from the upper surface, is denoted as W, the length is denoted as L, and the radius of the hollow-fiber membrane is denoted as r.

2. The hollow-fiber membrane module according to claim 1, wherein the water collecting member (115) includes a means for causing compressive deformation of the hollow-fiber membrane in a radial direction thereof.

3. The hollow-fiber membrane module according to claim 2, wherein the means for causing compressive deformation is a pair of convex parts (127) formed on facing inner walls of the water collecting member (115).

4. The hollow-fiber membrane module according to claim 1, wherein the water collecting member (115) includes a reinforcing structure (115b) formed by thickening a side wall of the water collecting member (115) in an out-of-plane direction of the hollow-fiber membrane sheet.

5. A hollow-fiber membrane unit (101) comprising a plurality of the hollow-fiber membrane modules (103) according to anyone of claims 1 to 4 arranged, wherein the plurality of the hollow-fiber membrane modules (103) are arranged at an interval of 3 mm or more and 15 mm or less.

6. The hollow-fiber membrane unit according to claim 5, wherein a thick wall part (115a) of the hollow-fiber membrane module (103) is dimensioned so as to be in contact with a thick wall part (115a) of an adjacent hollow-fiber membrane module (103).

7. The hollow-fiber membrane unit according to claim 5 or 6, wherein a reinforcing structure (115b) of the hollow-fiber membrane module (103) is dimensioned so as to be in contact with a reinforcing structure (115b) of an adjacent hollow-fiber membrane module (103).

8. The hollow-fiber membrane unit according to claim 5, which comprises a collective water intake pipe (129) coupling two or more adjacent hollow-fiber membrane modules (103) and communicating with all water intake ports (117) of the coupled two or more hollow-fiber membrane modules (103).

9. The hollow-fiber membrane unit according to claim 8, which comprises a seal member (137) disposed between the collective water intake pipe (129) and the hollow-fiber membrane modules (103) and surrounding the water intake port (117).

10. The hollow-fiber membrane unit according to any one of claims 5 to 9, wherein a membrane area per volume of the hollow-fiber membrane is from 100 to 1000 $m^2/m^3$.

**Patentansprüche**

1. Hohlfasermembranmodul (103), umfassend einen Hohlfasermembranbogen, der durch Anordnen einer Hohlfasermembran in einer Bogenform oder einem gestapelten Körper (113) davon geformt ist, und ein kistenförmiges Wassersammelelement (115), das den Hohlfasermembranbogen oder den gestapelten Körper daraus hält, wobei das Wassersammelelement (115) eine längliche Kastenform aufweist,

   wobei eine Oberfläche des Wassersammelelements (115) einen Öffnungsteil (119) zum Befestigen des Körper aus gestapeltem Hohlfasermembranbogen (113) darin aufweist, wobei die Innenseite des Öffnungsteils (119) mit einem Befestigungsharz (121) zum Befestigen des Körpers aus gestapeltem Hohlfasermembranbogen (113) an dem Wassersammelelement (115) gefüllt ist und der Körper aus gestapeltem Hohlfasermembranbogen (113) und das Wassersammelelement (115) flüssigkeitsdicht durch das Befestigungsharz (121) abgedichtet sind,
   wobei das Wassersammelelement (115) eine Längen-, Breiten- und Höhenabmessung aufweist,
   wobei das Wassersammelelement (115) eine Dicke, die einer Breite entspricht, von 20 mm oder weniger entlang einer ebenenverschobenen Richtung des Hohlfasermembranbogens aufweist, eine Grundbreite (D1) des Wassersammelelements (115) 15 mm oder weniger beträgt, und eine Dicke der Seitenwand des Wassersammelelements (115), die sich entlang der Öffnung zum Befestigen des Hohlfasermembranbogen in die ebenenverschobene Richtung erstreckt, 2 mm oder weniger beträgt,
   wobei das Wassersammelelement (115) einen Wassersammelpfad (125) zum Sammeln von behandeltem, durch eine Hohlfasermembran gefiltertem Wasser aufweist, und einen Wassereinlassanschluss (117), wobei der Wassereinlassanschluss (117) in einer elliptischen Form ist, die eine kleinere Achse aufweist, die sich in die ebenenverschobene Richtung des Hohlfasermembranbogens erstreckt, wobei der Wassereinlassanschluss (117) an mindestens einer Abschlussseite des Wassersammelelements (115) geformt ist, und wobei ein dicker Wandteil (115a), der eine verdickte Dicke (D2) aufweist, die dicker ist als die Grundbreite (D1) des Hohlfasermembranbogens in die ebenenverschobene Richtung des Wassersammelelements (115), mit der mindestens einem Abschlussseite des Wassersammelelements (115) ausgestattet ist, in der der Wassereinlassanschluss (117) geformt ist, und
   ein Anteil einer Gesamtfläche eines Querschnitts der Hohlfasermembran in einem horizontalen Querschnitt des Öffnungsteils zur Befestigung (119) an einer beliebigen Stelle mindestens 45 % beträgt, und der obere Grenzwert der Proportion 90 % oder weniger beträgt, und
   ausgedrückt ist durch die Gleichung:

$$n\pi r^2/WL$$

   wobei n die Anzahl von Hohlfasermembranen darstellt, wenn die Breite des Öffnungsteils zur Befestigung (119) von der oberen Oberfläche aus betrachtet als W bezeichnet ist, die Länge als L bezeichnet ist und der Radius der Hohlfasermembran als r bezeichnet ist.

2. Hohlfasermembranmodul nach Anspruch 1, wobei das Wassersammelelement (115) ein Mittel einschließt, um Druckverformung der Hohlfasermembran in eine radiale Richtung davon zu verursachen.

3. Hohlfasermembranmodul nach Anspruch 2, wobei das Mittel, um Druckverformung zu verursachen, ein Paar konvexer Teile (127) ist, das auf zeigenden Innenwänden des Wassersammelelements (115) geformt ist.

4. Hohlfasermembranmodul nach Anspruch 1, wobei das Wassersammelelement (115) eine Verstärkungsstruktur (115b) einschließt, die durch Verdicken einer Seitenwand des Wassersammelelements (115) in eine ebenenverschobene Richtung des Hohlfasermembranbogens geformt ist.

5. Hohlfasermembraneinheit (101), umfassend eine Vielzahl der Hohlfasermembranmodule (103), die nach einem der Ansprüche 1 bis 4 angeordnet sind,
   wobei die Vielzahl der Hohlfasermembranmodule (103) in einem Intervall von 3 mm oder mehr und 15 mm oder weniger angeordnet ist.

6. Hohlfasermembraneinheit nach Anspruch 5, wobei ein dicker Wandteil (115a) des Hohlfasermembranmoduls (103) so bemessen ist, dass es mit einem dicken Wandteil (115a) eines angrenzenden Hohlfasermembranmoduls (103) in Berührung steht.

**7.** Hohlfasermembraneinheit nach Anspruch 5 oder 6, wobei eine Verstärkungsstruktur (115b) des Hohlfasermembranmoduls (103) so bemessen ist, dass sie mit einer Verstärkungsstruktur (115b) eines angrenzenden Hohlfasermembranmoduls (103) in Berührung steht.

**8.** Hohlfasermembraneinheit nach Anspruch 5, umfassend ein gemeinsames Wassereinlassrohr (129), das zwei oder mehrere angrenzende Hohlfasermembranmodule (103) koppelt und mit allen Wassereinlassanschlüssen (117) der zwei oder mehreren gekoppelten Hohlfasermembranmodule (103) kommuniziert.

**9.** Hohlfasermembraneinheit nach Anspruch 8, umfassend ein Dichtungselement (137), das zwischen dem gemeinsamen Wassereinlassrohr (129) und den Hohlfasermembranmodulen (103) angeordnet ist und den Wassereinlassanschluss (117) umgibt.

**10.** Hohlfasermembraneinheit nach einem der Ansprüche 5 bis 9, wobei eine Membranfläche pro Volumen der Hohlfasermembran 100 bis 1000 $m^2/m^3$ beträgt.

**Revendications**

**1.** Module de membrane à fibres creuses (103) comprenant une feuille de membrane à fibres creuses formée par agencement d'une membrane à fibres creuses dans une forme de feuille ou un corps empilé (113) de celle-ci et un élément de collecte d'eau en forme de boîte (115) maintenant la feuille de membrane à fibres creuses ou le corps empilé de celle-ci, l'élément de collecte d'eau (115) présentant une forme de boîte allongée,

dans lequel une surface de l'élément de collecte d'eau (115) présente une partie d'ouverture (119) pour la fixation du corps empilé de feuille de membrane à fibres creuses (113) dedans, l'intérieur de la partie d'ouverture (119) étant rempli d'une résine de fixation (121) pour la fixation du corps empilé de feuille de membrane à fibres creuses (113) à l'élément de collecte d'eau (115), et le corps empilé de feuille de membrane à fibres creuses (113) et l'élément de collecte d'eau (115) étant scellés de manière étanche au liquide par cette résine de fixation (121),
dans lequel l'élément de collecte d'eau (115) présente une dimension de longueur, largeur et hauteur,
dans lequel l'élément de collecte d'eau (115) présente une épaisseur, correspondant à une largeur, de 20 mm ou moins le long d'une direction hors plan de la feuille de membrane à fibres creuses, une largeur de base (D1) de l'élément de collecte d'eau (115) est de 15 mm ou moins, et une épaisseur de la paroi latérale de l'élément de collecte d'eau (115) s'étendant le long de l'ouverture pour la fixation dans la direction hors plan de la feuille de membrane à fibres creuses est de 2 mm ou moins,
dans lequel l'élément de collecte d'eau (115) présente un trajet de collecte d'eau (125) pour la collecte d'eau traitée filtrée au travers d'une membrane à fibres creuses, et un orifice d'admission d'eau (117), l'orifice d'admission d'eau (117) étant sous une forme elliptique présentant un axe mineur s'étendant dans la direction hors plan de la feuille de membrane à fibres creuses, l'orifice d'admission d'eau (117) étant formé sur au moins une face d'extrémité de l'élément de collecte d'eau (115), et dans lequel une partie de paroi épaisse (115a) présentant une épaisseur épaissie (D2) qui est plus épaisse que la largeur de base (D1) dans la direction hors plan de la feuille de membrane à fibres creuses de l'élément de collecte d'eau (115) est équipée sur l'au moins une face d'extrémité de l'élément de collecte d'eau (115) présentant l'orifice d'admission d'eau (117) formé dessus, et une proportion d'une zone totale d'une section transversale de la membrane à fibres creuses dans une section transversale horizontale de la partie d'ouverture pour la fixation (119) dans une position arbitraire est au moins de 45 % et la limite supérieure de la proportion est de 90 % ou moins, et
est exprimée par l'équation :

$$n\pi r2/WL$$

dans laquelle n représente le nombre de membrane à fibres creuses lorsque la largeur de la partie d'ouverture pour la fixation (119), lorsqu'elle est vue depuis la surface supérieure, est indiquée comme W, la longueur est indiquée comme L, et le rayon de la membrane à fibres creuses est indiqué comme r.

**2.** Module de membrane à fibres creuses selon la revendication 1, dans lequel l'élément de collecte d'eau (115) inclut un moyen pour provoquer la déformation compressive de la membrane à fibres creuses dans une direction radiale de celle-ci.

**3.** Module de membrane à fibres creuses selon la revendication 2, dans lequel le moyen pour provoquer la déformation compressive est une paire de parties convexes (127) formées sur des parois intérieures avant de l'élément de collecte d'eau (115).

**4.** Module de membrane à fibres creuses selon la revendication 1, dans lequel l'élément de collecte d'eau (115) inclut une structure de renforcement (115b) formée par épaississement d'une paroi latérale de l'élément de collecte d'eau (115) dans une direction hors plan de la feuille de membrane à fibres creuses.

**5.** Unité de membrane à fibres creuses (101) comprenant une pluralité des modules de membrane à fibres creuses (103) selon l'une quelconque des revendications 1 à 4 agencés, dans laquelle la pluralité des modules de membrane à fibres creuses (103) sont agencés à un intervalle de 3 mm ou plus et 15 mm ou moins.

**6.** Unité de membrane à fibres creuses selon la revendication 5, dans laquelle une partie de paroi épaisse (115a) du module de membrane à fibres creuses (103) est dimensionnée de sorte à être en contact avec une partie de paroi épaisse (115a) d'un module de membrane à fibres creuses (103) adjacent.

**7.** Unité de membrane à fibres creuses selon la revendication 5 ou 6, dans laquelle une structure de renforcement (115b) du module de membrane à fibres creuses (103) est dimensionnée de sorte à être en contact avec une structure de renforcement (115b) d'un module de membrane à fibres creuses (103) adjacent.

**8.** Unité de membrane à fibres creuses selon la revendication 5, qui comprend un tuyau d'admission d'eau collective (129) couplant deux ou plusieurs modules de membrane à fibres creuses (103) adjacents et communiquant avec tous les orifices d'admission d'eau (117) des deux ou plusieurs modules de membrane à fibres creuses (103) couplés.

**9.** Unité de membrane à fibres creuses selon la revendication 8, qui comprend un élément étanche (137) disposé entre le tuyau d'admission d'eau collective (129) et les modules de membrane à fibres creuses (103) et entourant l'orifice d'admission d'eau (117).

**10.** Unité de membrane à fibres creuses selon l'une quelconque des revendications 5 à 9, dans laquelle une zone de membrane par volume de la membrane à fibres creuses est de 100 à 1000 $m^2/m^3$.

[Fig. 1]

# FIG.1

[Fig. 2]

# FIG.2

103

109    109                                    109

107

[Fig. 3]

# FIG.3

[Fig. 4]

# FIG.4

[Fig. 5]

# FIG.5

[Fig. 6]

# FIG.6

[Fig. 7]

# FIG.7

[Fig. 8]

# FIG.8

[Fig. 9]

# FIG.9

[Fig. 10]

## FIG.10

[Fig. 11]

## FIG.11

[Fig. 12]

FIG.12

[Fig. 13]

## FIG.13

[Fig. 14]

## FIG.14

[Fig. 15]

## FIG.15

[Fig. 16]

## FIG.16

[Fig. 17]

# FIG.17

[Fig. 18]

# FIG.18

[Fig. 19]

# FIG.19

[Fig. 20]

# FIG.20

**EP 2 835 174 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1352681 A1
- WO 2010098089 A
- JP 2008142583 A
- JP 2009195844 A
- JP 2006061816 A